# EUROPÄISCHE PATENTANMELDUNG

(11) **EP 0 689 012 A1**
(43) Veröffentlichungstag der Anmeldung: **27.12.1995**
(21) Anmeldenummer: 95109494.5
(22) Anmeldetag: 20.06.1995
(51) Int. Cl.: F24D 19/10

(54) **Steuerung von Umwälzpumpen**

(30) Priorität: 25.06.1994 DE 4422297
(71) Anmelder: VIESSMANN WERKE GmbH & CO., D-35107 Allendorf/Eder (DE)
(72) Erfinder: Schmitz, Heribert, D-35619 Braunfels (DE)
(74) Vertreter: Wolf, Günter, Dipl.-Ing.

(57) **Zusammenfassung**

Die Erfindung betrifft die Steuerung von Umwälzpumpen für die Zwangsförderung des Wärmeträgermediums vom Wärmeerzeuger (K) zum Wärmeverbraucher (V) mit drehzahlregelbaren Pumpen (1), deren Antrieb (2) mit einer in- oder extenen, sensorgesteuerten, übergeordneten Regelung (3) verbunden ist. Um bei erstmaliger Inbetriebnahme oder nach längerem Stillstand für eine Entlüftung des das Wärmeträgermedium führenden Systems zu sorgen, ist in der Pumpenregelung (3) ein die volle Drehzahl auslösendes und diese über eine einstellbare Periode aufrechterhaltendes Zeitglied (4) angeordnet.

## Beschreibung

Die Erfindung betrifft die Steuerung von Umwälzpumpen für die Zwangsförderung des Wärmeträgermediums vom Wärmeerzeuger zum Wärmeverbraucher in Zentralheizungsanlagen mit drehzahlregelbaren Pumpen, deren Antrieb mit einer in- oder externen, sensorgesteuerten, übergeordneten Regelung verbunden ist.

Drehzahlsteuerbare Umwälzpumpen für den genannten Zweck sind hinlänglich bekannt und in Benutzung, so daß es diesbezüglich keines besonderen druckschriftlichen Nachweises bedarf. Die Ansteuerung von drehzahlgeregelten Heizungsumwälzpumpen und/oder Pumpen für die Speicherwassererwärmung erfolgt durch sensorische Vorgaben. Diese Sensoren erkennen den Bedarf und veranlassen eine bedarfsangepaßte Drehzahl, die einen entsprechenden, für den Bedarf ausreichenden Wasservolumenstrom im Fördersystem bewirkt. Bei erstmaliger Inbetriebnahme oder nach längerem Stillstand von solchen Systemen kann das zur Folge haben, daß bspw. vom Außenthermostaten bedarfsgesteuert ein durch niedrige Drehzahl bewirkter, geringer Volumenstrom des Wärmeträgermediums erzeugt wird, der nicht sicherstellt, daß auch die im System enthaltene Luft zu den dafür vorgesehenen Entlüftungsstellen gelangt. Luft in solchen Systemen ist unerwünscht.

Der Erfindung liegt die Aufgabe zugrunde, mit einfachen Mitteln dafür zu sorgen, daß bei erstmaliger Inbetriebnahme oder nach längerem Stillstand eine zuverlässige Entlüftung des das Wärmeträgermedium führenden Systems bewirkt wird.

Diese Aufgabe ist mit einer Steuerung von Umwälzpumpen der eingangs genannten Art und für den genannten Zweck nach der Erfindung dadurch gelöst, daß in der Pumpenregelung ein die volle Dehzahl auslösendes und diese über eine einstellbare Periode aufrechterhaltendes Zeitglied angeordnet ist.

Dieses Zeitschaltglied ist so mit der normalen Bedarfsregelung gekoppelt, daß es bei erstmaliger Inbetriebnahme des Systems oder nach längerer Stillstandszeit dahingehend wirksam wird, daß, wenn von den Temperatursensoren, sei es ein Außentemperatursensor und/oder ein Brauchwassersensor aufgrund der an diesen Sensoren vorliegenden Temperaturen kein Schaltimpuls für die Umwälzpumpe abgegeben, wohl aber vom Zeitschaltglied die Pumpe auf maximale Drehzahl geschaltet wird. In diesem Fall hat also das Zeitglied gewissermaßen Vorrang und schaltet die Umwälzpumpe mit voller Drehzahl ein. Wenn dann die vorgegebene Periode, in der der volle Volumenstrom durch die Anlage gefördert wird, durchlaufen und damit die angesammelte Luft aus dem System entfernt ist, kommt wieder die normale Bedarfsregelung, von den Bedarfssensoren gesteuert, zur Wirkung.

Dargestellt ist dies anhand der zeichnerischen und stark schematisierten Darstellung eines Ausführungsbeispieles, in dem der Wärmeerzeuger mit K (bspw. Heizkessel) und der Wärmeverbraucher (bspw. Heizung und/oder Brauchwasserbereiter) mit V bezeichnet ist. 1 Stellt die drehzahlregelbare Pumpe mit ihrem Antrieb 2 dar, zu dem die Pumpenregelung 3 gehört, die mit einem Außentemperatursensor 5 und beim Ausführungsbeispiel mit einem Brauchwassersensor 6 verbunden ist.

Da sich die Dauer der Periode an der Größe und ggf. auch der Geometrie des zu durchströmenden Systems zu orientieren hat, ist das Zeitglied 4 entsprechend einstellbar ausgebildet, so daß Volldrehzahllaufzeiten der Pumpe 1 vorgegeben werden können, die gewährleisten, daß im System angesammelte Luft ganz bzw. weitestgehend während der eingestellten Periode aus dem System entfernt wird.

Abgesehen davon, daß das Zeitglied 4 als integrales Bauteil des Antriebes 2 der Pumpe 1 ausgebildet sein kann, ist es aber auch möglich, da in der Regel die normale Bedarfsregelung der Umwälzpumpe in der Gesamtregelung für das ganze System integriert ist, das einstellbare Zeitglied 4, dabei wesentlicher Bestandteil der Pumpe 1 bleibend, mit in die Gesamtregelung einzubeziehen.

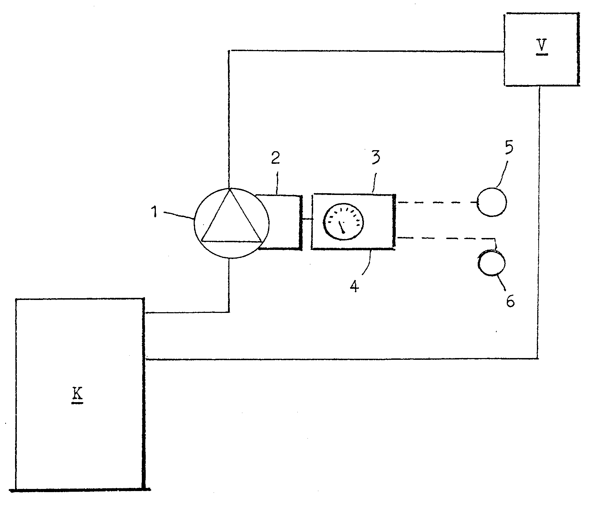

## Patentansprüche

1. Steuerung von Umwälzpumpen für die Zwangsförderung des Wärmeträgermediums vom Wärmeerzeuger (K) zum Wärmeverbraucher (V) mit drehzahlregelbaren Pumpen (1), deren Antrieb (2) mit einer in- oder extenen, sensorgesteuerten, übergeordneten Regelung (3) verbunden ist,
**dadurch gekennzeichnet,**
daß in der Pumpenregelung (3) ein die volle Drehzahl auslösendes und diese über eine einstellbare Periode aufrechterhaltendes Zeitglied (4) angeordnet ist.
